**Europäisches Patentamt**

**European Patent Office**

**Office européen des brevets**

(11) Veröffentlichungsnummer : **0 417 062 B1**

(12) ## EUROPÄISCHE PATENTSCHRIFT

(45) Veröffentlichungstag der Patentschrift :
**14.07.93 Patentblatt 93/28**

(51) Int. Cl.$^5$ : **A23L 1/237**

(21) Anmeldenummer : **90890234.9**

(22) Anmeldetag : **02.08.90**

(54) **Natriumreduziertes Speisesalz.**

(30) Priorität : **08.09.89 AT 2110/89**

(43) Veröffentlichungstag der Anmeldung :
**13.03.91 Patentblatt 91/11**

(45) Bekanntmachung des Hinweises auf die
Patenterteilung :
**14.07.93 Patentblatt 93/28**

(84) Benannte Vertragsstaaten :
**AT BE CH DE DK ES FR GB GR IT LI LU NL SE**

(56) Entgegenhaltungen :
**WO-A-85/00958**
**BE-A- 496 696**
**BE-A- 902 690**

(56) Entgegenhaltungen :
**GB-A- 336 279**
**CHEMICAL ABSTRACTS, vol. 101, no. 15, Oktober 1984 Columbus, Ohio, USA ref. no. 129185X**

(73) Patentinhaber : **BAD ISCHLER SALZ Ges.m.b.H**
**Fichtegasse 5**
**A-1010 Wien (AT)**

(72) Erfinder : **Schwaiger, Herbert**
**Seewinkel 2**
**A-4802 Ebensee (AT)**

(74) Vertreter : **Pawloy, Heinrich, Dr. et al**
**Riemergasse 14**
**A-1010 Wien (AT)**

Jouve, 18, rue Saint-Denis, 75001 PARIS

EP 0 417 062 B1

**Beschreibung**

Natriumreduziertes Speisesalz

Natriumchlorid, Kochsalz, ist an sich ein unentbehrlicher Bestandteil der menschlichen Nahrung. Es ist jedoch bekannt, daß ein übermäßiger Anteil an Kochsalz in der menschlichen Nahrung gesundheitliche Risiken mit sich bringt.

Nun ist Kochsalz nicht nur ein notwendiger Bestandteil der Nahrungsmittel, sondern außerdem auch ein Würzstoff sowie ein Konservierungsstoff. Aus diesen beiden Gründen sind im allgemeinen fertig erhältliche Nahrungsmittel oft mit mehr Kochsalz versetzt, als der menschlichen Gesundheit an sich zuträglich wäre. Darüber hinaus sind manche Menschen gewohnt, die ihnen vorgesetzten Speisen automatisch nachzusalzen, was zu einer weiteren Erhöhung der aufgenommenen Salzmenge beiträgt.

Es hat daher nicht an Versuchen gefehlt, Würzstoffe herzustellen, die einen dem Kochsalz ähnlichen Geschmack besitzen, jedoch weniger Natriumionen als Kochsalz enthalten. In erster Linie wurde als Kochsalzersatz Kaliumchlorid vorgeschlagen. Dieses besitzt jedoch einen bitteren Geschmack, welcher von den meisten Personen als unangenehm empfunden wird. Kaliumchlorid ist an sich zwar für den Menschen ebenfalls notwendig, eine Überdosierung von Kaliumchlorid ruft jedoch ebenfalls Gesundheitsschädigungen beim Menschen hervor. Ein einfacher Ersatz von Natriumchlorid durch Kaliumchlorid kommt daher aus den beiden obangeführten Gründen nicht in Frage.

Es gibt zahlreiche Versuche, dem Kaliumchlorid den bitteren Geschmack zu nehmen. Zu diesem Zweck wird gemäß der US-PS 3 505 082 Kaliumchlorid mit Fumarsäure gemischt; gemäß US-PS 3 782 974 wird dem Kaliumchlorid ein Gemisch aus Ascorbinsäure, Fumarsäure und Zitronensäure zugesetzt; gemäß US-PS 3 860 732 kann dem Kaliumchlorid Lactose und/oder Dextrose und gereinigter Weinstein zugesetzt werden, während gemäß DE-PS 3 035 518 eine Mischung aus Kaliumchlorid und autolysierter Hefe unter Schutz gestellt wird. Die DE-PS 0 124 254 schließlich offenbart einen Salzersatzstoff, der aus einer Mischung von Kaliumchlorid mit nichtreduzierendem Zucker, einem Mittel gegen Zusammenbacken, einer genießbaren organischen Säure und schließlich einem Glutaminatsalz besteht.

Die vorliegende Erfindung bezieht sich nun auf ein natriumreduziertes Speisesalz, welches den Bedürfnissen des menschlichen Körpers mehr entgegenkommt als dies bisher der Fall war. Das erfindungsgemäße Speisesalz besteht aus einem Gemisch aus Natriumchlorid und Kaliumchlorid und enthält außerdem einen Anteil an Monomagnesiumcitrat-5-hydrat, der ausreicht, den bitteren Geschmack von Kaliumchlorid zu unterdrücken. Der Gehalt an dem genannten Monomagnesiumcitrat-5-hydrat dient nicht nur der Unterdrückung des bitteren Geschmackes von Kaliumchlorid, sondern ist darüber hinaus eine zusätzliche Quelle von Magnesiumionen für den menschlichen Körper, für den Magnesium -es greift in die neuromuskuläre Erregungsübertragung ein - ein wichtiges Element ist.

Es wurde gefunden, daß im allgemeinen das Verhältnis von Natriumchlorid zu Kaliumchlorid im Gewichtsverhältnis von 5 : 1 bis 1 : 1 liegen soll; das Verhältnis von Kaliumchlorid : Monomagnesiumcitrat-5-hydrat soll im allgemeinen 1 : 5 bis 5 : 1 betragen.

Eine besonders geeignete Mischung enthält Natriumchlorid : Kaliumchlorid : Monomagnesiumcitrat-5-hydrat im Gewichtsverhältnis 2,6 : 1 : 0,08.

Es sei erwähnt, daß die BE-A-902 690 die Verwendung von Magnesiumcitrat, nämlich konkret von Trimagnesiumdicitrat, als Magnesiumquelle in einer Kochsalzmischung beschreibt. Zur Maskierung des bitteren Geschmacks von KCl werden jedoch zusätzlich Magnesiumsulfat oder Trikaliumcitrat verwendet, welche aber beide stark hygroskopisch sind.

Die folgenden Beispiele sollen den Gegenstand der vorliegenden Erfindung erläutern, ohne daß diese jedoch darauf beschränkt werden soll.

**Beispiel 1 :**

69 % NaCl
20 % KCl
10 % Monomagnesiumcitrat-5-hydrat
1 % Socal®
werden miteinander gemischt. Dies entspricht:

|                    |          | mval/g Salz |
| ------------------ | -------- | ----------- |
| Mg-Gehalt/kg :     | 8,4 g    | 0,7         |
| K-Gehalt/kg :      | 104,9 g  | 2,7         |
| Na-Gehalt/kg :     | 271,4 g  | 11,8        |

Mischungsverhältnis: K : Na : Mg = 1 : 2,6 : 0,08.

Mit der oben angegebenen Mischung wurde eine klare Rindsuppe gesalzen, die dann geschmacklich von auf diesem Gebiet erfahrenen Personen mit einer Rindsuppe verglichen wurde, welche mit der gleichen Menge Kochsalz versetzt war. Die Testpersonen konnten zwischen den zu vergleichenden Suppen keinen geschmacklichen Unterschied feststellen.

**Beispiel 2 :**

69 % NaCl
15 % KCl
15 % Monomagnesiumcitrat-5-hydrat
1 % Socal®
werden miteinander gemischt. Dies entspricht:

|                    |          | mval/g Salz |
| ------------------ | -------- | ----------- |
| Mg-Gehalt/kg :     | 12,6 g   | 1,0         |
| K-Gehalt/kg :      | 78,7 g   | 2,0         |
| Na-Gehalt/kg :     | 271,4 g  | 11,8        |

Mischungsverhältnis: K : Na : Mg = 1 : 3,45 : 0,16.

Bei dem wie in Beispiel 1 beschrieben durchgeführten Vergleichstest stellten die Versuchspersonen fest, daß die mit obiger Mischung versetzte Suppe einen leichten Zitronengeschmack aufwies.

**Beispiel 3 :**

74 % NaCl
15 % KCl
10 % Monomagnesiumcitrat-5-hydrat
1 % Socal®
entspricht:

|                    |          | mval/g Salz |
| ------------------ | -------- | ----------- |
| Mg-Gehalt/kg :     | 8,4 g    | 0,7         |
| K-Gehalt/kg :      | 78,7 g   | 2,0         |
| Na-Gehalt/kg :     | 291,1 g  | 12,7        |

Mischungsverhältnis: K : Na : Mg = 1 : 3,7 : 0,11.

Ergebnis wie in Beispiel 1, doch nur 26 % Natriumreduktion.

**Beispiel 4 :**

79 % NaCl
15 % KCl
5 % Monomagnesiumcitrat-5-hydrat
1 % Socal®
werden miteinander gemischt. Dies entspricht:

|  | | mval/g Salz |
| --- | --- | --- |
| Mg-Gehalt/kg : | 4,2 g | 0,35 |
| K-Gehalt/kg : | 78,7 g | 2,0 |
| Na-Gehalt/kg : | 310,8 g | 13,5 |

Mischungsverhältnis: K : Na : Mg = 1 : 3,95 : 0,05.

Bei dem, wie in Beispiel 1 beschrieben, durchgeführten Suppenvergleichstest stellten die Prüfpersonen fest, daß die mit obigem Gemisch versetzten Suppe einen zwar verminderten, aber dennoch wahrnehmbaren Geschmack nach Kaliumchlorid aufwies.

**Beispiel 5 :**

59 % NaCl
20 % KCl
20 % Monomagnesiumcitrat-5-hydrat
1 % Socal®
werden miteinander gemischt. Dies entspricht:

|  | | mval/g Salz |
| --- | --- | --- |
| Mg-Gehalt/kg : | 16,8 g | 1,4 |
| K-Gehalt/kg : | 104,9 g | 2,7 |
| Na-Gehalt/kg : | 232,1 g | 10,1 |

Mischungsverhältnis: K : Na : Mg = 1 : 2,2 : 0,16.

Monomagnesiumcitrat-5-hydrat schmeckt etwas vor; die Mischung wird als leicht säuerlich empfunden.

**Patentansprüche**

1. Natriumreduziertes Speisesalz, welches ein Gemisch aus NaCl und KCl und außerdem einen Anteil Monomagnesiumcitrat-5-hydrat enthält, der ausreicht, den bitteren Geschmack von KCl zu unterdrücken.

2. Natriumreduziertes Speisesalz nach Anspruch 1, dadurch gekennzeichnet, daß es NaCl : KCl im Gewichtsverhältnis von 5 : 1 bis 1 : 1 enthält.

3. Natriumreduziertes Speisesalz nach Anspruch 1 oder 2, dadurch gekennzeichnet, daß es KCl : Monomagnesiumcitrat-5-hydrat im Gewichtsverhältnis von 1 : 5 bis 5 : 1 enthält.

4. Natriumreduziertes Speisesalz nach einem der Ansprüche 1 bis 3, dadurch gekennzeichnet, daß es NaCl : KCl : Monomagnesiumcitrat-5-hydrat im Gewichtsverhältnis von 2,6 : 1 : 0,08 enthält.

**Claims**

1. A table and cooking salt reduced in its sodium contents, which contains a mixture of NaCl and KCl and additionally an amount of monomagnesium citrate-5-hydrate being sufficient to suppress the bitter flavor of KCl.

2. The table and cooking salt reduced in its sodium contents of claim 1, characterized in that it contains NaCl : KCl in the ratio of 5 : 1 to 1 : 1 by weight.

3. The table and cooking salt reduced in its sodium contents of claim 1 or 2, characterized in that it contains KCl : monomagnesium citrate-5-hydrate in the ratio of 1 : 5 to 5 : 1 by weight.

4. The table and cooking salt reduced in its sodium contents of one of claims 1 to 3, characterized in that it contains NaCl : KCl : monomagnesium citrate-5-hydrate in the ratio of 2,6 : 1 : 0,08 by weight.

**Revendications**

1. Sel de table à teneur réduite en sodium, qui contient un mélange de NaCl et de KCl et, en outre, une proportion de citrate dibasique de magnésium pentahydraté qui suffit pour supprimer le goût amer du KCl.

2. Sel de table à teneur réduite en sodium suivant la revendication 1, caractérisé en ce qu'il contient un rapport en poids NaCl:KCl de 5:1 à 1:1.

3. Sel de table à teneur réduite en sodium suivant la revendication 1 ou 2, caractérisé en ce qu'il contient un rapport en poids KCl:citrate dibasique de magnésium pentahydraté de 1:5 à 5:1.

4. Sel de table à teneur réduite en sodium suivant l'une des revendications 1 à 3, caractérisé en ce qu'il contient une proportion en poids NaCl:KCl:citrate dibasique de magnésium pentahydraté de 2,6:1:0,08.